# EUROPEAN PATENT APPLICATION

(11) **EP 2 732 687 A1**
(43) Date of publication of application: **21.05.2014**
(21) Application number: 12811737.1
(22) Date of filing: 10.07.2012
(51) Int. Cl.: A01D 34/78, A01D 34/76

(54) **MOBILE ELECTRIC WORK MACHINE**

(30) Priority: 12.07.2011 JP 2011154187; 12.07.2011 JP 2011154188; 12.07.2011 JP 2011154189
(71) Applicant: Yanmar Co., Ltd., Osaka-shi, Osaka 530-8311 (JP)
(72) Inventor: MOTEGI, Shinichi, Osaka-shi Osaka 530-8311 (JP); EBIHARA, Tomoyuki, Osaka-shi Osaka 530-8311 (JP)
(74) Representative: Jostarndt, Hans-Dieter
(86) International application number: PCT/JP2012/067578
(87) International publication number: WO 2013/008812

(57) **Abstract**

Provided is a mobile electric work machine that can avoid overload operation of working parts. The mobile electric work machine is an electric lawn mowing work machine (100) that carries out work by working parts (10A, 10B) driven by electric power supplied by blade inverters (14A, 14B) while being run by a running part (20). The blade rotational velocity (Vba) of a blade (11A) or the rotational velocity (Vbb) of a blade (11B) is controlled such that the work load on the working parts (10A, 10B) is constant on the basis of blade inverter current values (Iba, Ibb) from blade inverters (14A, 14B).

## Description

### Technical Field

The present invention relates to a technique of a mobile electric work machine which has a function of avoiding an overload operation of a working part.

### Background Art

A mobile work machine is publicly known as a work machine which performs work while traveling. As a specific mobile work machine, for example, a mower for mowing a lawn while traveling, or a cultivator for cultivating the ground while traveling, etc. is known. A mobile electric work machine is known as the mobile work machine in which a working part and a running part is electrically driven. As the specific mobile electric work machine, an electric lawn mowing work machine which includes an electrically-driven lawn mowing part and an electrically-driven running part is publicly known (for example, see Patent Literature 1). With respect to the electric lawn mowing work machine, DC electric power is supplied from a battery to an inverter, and DC electric power is converted into AC electric power through the inverter, and the converted AC electric power is supplied to a motor so as to drive the lawn mowing part.

The winding temperature of the motor rises with an increase in a load. Therefore, the motor itself has a protection device for avoiding excessive increase in the winding temperature. Also, the inverter has a protection device so as not to supply an overcurrent to the motor. As such, with respect to an overload operation of the motor, the motor itself and the inverter respectively have the protection device. Accordingly, when an overcurrent is applied, power supply is interrupted by the protection devices. Also, as an entire system of the electric lawn mowing work machine, overload operation of the motor needs to be prevented so as to prevent an operation stop of the electric lawn mowing work machine due to the operation of these protection devices etc.

However, the work load of the lawn mowing part of the electric lawn mowing work machine is determined by a wide variety of factors such as running speed of the running part as a working state of the electric lawn mowing work machine, the height of the lawn mowing part from the ground surface, mowing speed of the lawn mowing part, the condition of a lawn as a working condition, etc. Accordingly, it was difficult to uniquely determine the work load of the lawn mowing part and to uniquely avoid an overload operation.

### Prior Art Documents

### Patent Literature

Patent Literature 1: US Patent No. 5540037, Description

### SUMMARY OF THE INVENTION

### Problems to Be Solved by the Invention

An object of the invention is to provide a mobile electric work machine which can avoid an overload operation of a working part.

### Means for Solving the Problems

A mobile electric work machine according to the present invention carries out work by a working part driven by electric power supplied by a power converter while being run by a running part. With respect to the mobile electric work machine, the working speed of the working part is preferable to be controlled such that the work load on the working part is constant on the basis of the load torque value from the power converter.

In the mobile electric work machine according to the present invention, the upper limit of the working speed is set.

A mobile electric work machine according to the present invention carries out work by a working part driven by electric power supplied by a power converter while being run by a running part. With respect to the mobile electric work machine, the working speed of the working part is controlled such that the work load on the working part does not exceed a predetermined load on the basis of the load torque value from the power converter.

In the mobile electric work machine according to the present invention, when the plurality of working parts and power converters exist, the maximum load torque value is defined as the load torque value.

### Effects of the Invention

According to the mobile electric work machine of the present invention, the work load on the working part is constant. As such, an overload operation of the working part can be avoided.

According to the mobile electric work machine of the present invention, an upper limit of the working speed of the working part is set. As such, the working part can be prevented from running out of control.

According to the mobile electric work machine of the present invention, the working part is controlled such that the work load of the working part does not exceed a predetermined upper limit load. As such, an overload operation of the working part can be avoided.

According to the mobile electric work machine of the present invention, when the plurality of working parts exist, the working part that bears the maximum work load can be selected. As such, an overload operation of the working part can be avoided.

### BRIEF DESCRIPTION OF THE DRAWINGS

[FIG. 1] FIG. 1 illustrates the entire configuration of an electric lawn mowing work machine according to an embodiment of the present invention.
[FIG. 2] FIG. 2 illustrates the system configuration of the electric lawn mowing work machine.
[FIG. 3] FIG. 3 illustrates a graph of a running speed regulation 1 according to a first embodiment.
[FIG. 4] FIG. 4 illustrates a graph of a running speed regulation 2 according to the first embodiment.
[FIG. 5] FIG. 5 illustrates a graph of a blade rotational velocity regulation 1 according to a second embodiment.
[FIG. 6] FIG. 6 illustrates a graph of a blade rotational velocity regulation 2 according to the second embodiment.
[FIG. 7] FIG. 7 illustrates a graph of a deck height regulation 1 according to a third embodiment.
[FIG. 8] FIG. 8 illustrates a graph of a deck height regulation 2 according to the third embodiment.

### DESCRIPTION OF EMBODIMENTS

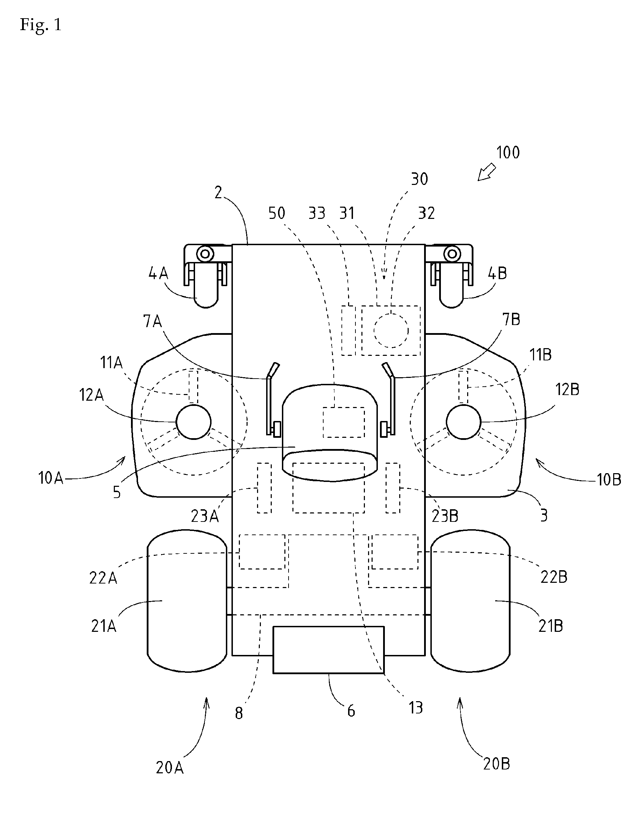

An explanation will be given of the configuration of an electric lawn mowing work machine 100 with reference to FIG. 1. The electric lawn mowing work machine 100 is in accordance with an embodiment of a mobile electric work machine of the present invention. The electric lawn mowing work machine 100 is a work machine which moves (runs) through electric driving and mows a lawn through electric driving.

The electric lawn mowing work machine 100 includes a machine body frame 2 provided with running parts 20A, 20B, as a moving part, a deck 3 provided with working parts 10A, 10B, and a deck height adjusting part 30. The deck 3 is liftably and lowerably arranged in a midway part in the front/rear direction of the machine body frame 2 between the traveling wheels 21A, 21B and auxiliary wheels 4A, 4B.

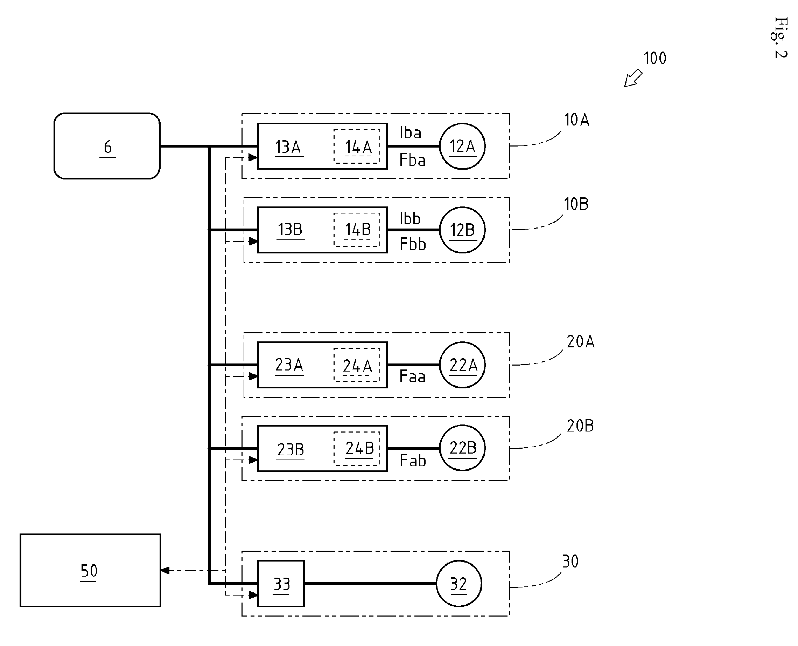

The working parts 10A, 10B are devices for mowing a lawn. The working parts 10A, 10B are arranged on both right/left sides of the deck 3. The working parts 10A, 10B include blades 11A, 11b, blade motors 12A, 12B, and blade drivers 13A, 13B. The blades 11A, 11B are rotary blades for mowing a lawn. The blade motors 12A, 12B are provided for rotatively driving each blade 11A, 11B. The blade drivers 13A, 13B are devices for rotatively controlling each blade motor 12A, 12B. A blade driver 13 is consisting of the blade drivers 13A, 13B (see FIG. 2).

The running parts 20A, 20B are devices for enabling the electric lawn mowing work machine 100 to travel. The running parts 20A, 20B are arranged on both right/left sides of the rear portion of the machine body frame 2. The running parts 20A, 20B include the traveling wheels 21A, 21B, a transmission 8, axle motors 22A, 22B, and axle drives 23A, 23B. The traveling wheels 21A, 21B are driving wheels of the electric lawn mowing work machine 100. The axle motors 22A, 22B are provided for rotatively driving each traveling wheel 21A, 21B through the transmission 8. The axle drivers 23A, 23B are devices for rotatively controlling each axle motor 22A, 22B.

The deck height adjusting part 30 is a device for adjusting the height position of the deck 3 from the surface of the earth. The deck height adjusting part 30 is arranged between the machine body frame 2 and the deck 3. The deck height adjusting part 30 includes a deck height adjusting mechanism 31, a deck motor 32, and a deck driver 33. The deck height adjusting mechanism 31 is provided as a lifting up and down mechanism connecting the machine body frame 2 and the deck 3. The deck height adjusting mechanism 31 adjusts the height position of the deck 3 from the surface of the earth. The deck motor 32 drives the deck height adjusting mechanism 31. The deck driver 33 is a device for rotatively controlling the deck motor 32.

The electric lawn mowing work machine 100 includes the auxiliary wheels 4A, 4B, an operator's seat 5, a battery 6, and a system controller 50 as an integral control device. The auxiliary wheels 4A, 4B are arranged on both right/left sides of the front portion of the machine body frame 2. An operation part is arranged in a midway part in the front/rear direction of the machine body frame 2 above the deck 3. Turning levers 7A, 7B are arranged on both right/left sides of the operator's seat 5. The battery 6 is arranged at the rearmost of the machine body frame 2. The system controller 50 is arranged below the operator's seat 5.

An explanation will be given of an electrical system configuration of the electric lawn mowing work machine 100 with reference to FIG. 2. In FIG. 2, heavy current carrying wires (electric power supply wires) are shown by continuous bold lines, whereas light current carrying wires (electrical communication lines) are shown by dashed lines.

As the electrical system configuration, the electric lawn mowing work machine 100 includes working parts 10A, 10B, running parts 20A, 20B as a traveling part, the deck height adjusting part 30, the system controller 50 as a integral control device, and the battery 6.

The working part 10A includes the blade motor 12A and the blade driver 13A. A blade inverter 14A as a power converter is arranged in the blade driver 13A. The blade inverter 14A converts a DC supplied from the battery 6 into an AC to feed the blade motor 12A. In the working part 10A, a DC from the battery 6 is supplied to the blade inverter 14A, and the supplied DC is converted into an AC by the blade inverter 14A. As such, the AC is supplied to the blade motor 12A by the blade driver 13A.

Since the working part 10B has the same configuration as the working part 10A, an explanation of the working part 10B is omitted.

The blade driver 13A has a function of detecting a blade inverter current value Iba as an output current value. The blade inverter current value Iba is an AC value that is supplied to the blade motor 12A. The blade inverter current value Iba is proportional to a load torque value corresponding to the work load of the working part 10A.

The blade driver 13B has a function of detecting a blade inverter current value Iba as an output current value. Since the blade inverter current value Ibb is the same as the blade inverter current value Iba, an explanation of the blade inverter current value Ibb is omitted.

The blade driver 13A has a function of controlling a blade inverter frequency Fba as a frequency of the output current of the blade inverter 14A. The blade inverter frequency Fba is proportional to an output rotation number of the blade motor 12A, and also is proportional to a rotation number of the blade 11A. That is to say, the blade inverter frequency Fba is proportional to a blade rotating speed Vba as a working speed.

The blade driver 13B has a function of controlling a blade inverter frequency Fbb as a frequency of the output current of the blade inverter 14B. Since the blade inverter frequency Fbb is the same as the blade inverter frequency Fba, an explanation of the blade inverter frequency Fbb is omitted.

The running part 20A includes the axle motor 22A and the axle driver 23A. An axle inverter 24A is arranged in the axle driver 23A. The axle inverter 24A converts a DC supplied from the battery 6 into an AC to feed the axle motor 22A. In the running part 20A, a DC from the battery 6 is supplied to the axle inverter 24A, and the DC supplied by the axle inverter 24A is converted into an AC. As such, the AC is fed to the axle motor 22A by the axle driver 23A.

Since the running part 20B has the same configuration as the running part 20A, an explanation of the running part 20B is omitted.

The axle driver 23A has a function of controlling an axle inverter frequency Faa as a frequency of the output current of the axle inverter 24A. The axle inverter frequency Faa is proportional to an output rotation number of the axle motor 22A, and also is proportional to a rotation number of the traveling wheel 21A. That is to say, the axle inverter frequency Faa is proportional to a running speed V as a traveling speed.

The axle driver 23B has a function of controlling an axle inverter frequency Fab as a frequency of the output current of an axle inverter 24B. Since the axle inverter frequency Fab is the same as the axle inverter frequency Faa, an explanation of the axle inverter frequency Fab is omitted.

The deck height adjusting part 30 includes the deck motor 32 and the deck driver 33. In the deck height adjusting part 30, a DC from the battery 6 is supplied to the deck motor 32.

The deck driver 33 has a function of controlling the deck motor 32 so as to adjust a deck height position H of the deck 3 as a work position.

In the system controller 50, the blade drivers 13A, 13B , the axle drivers 23A, 23B, and the deck driver 33 are connected through electrical communication lines (communication bus lines).

The system controller 50 has a function of reading the blade inverter current value Iba through the blade driver 13A. In the same manner, the system controller 50 has a function of reading the blade inverter current value Ibb through the blade driver 13B.

The system controller 50 has a function of controlling the blade inverter frequency Fba through the blade driver 13A so as to control the blade rotating speed Vba. In the same manner, the system controller 50 has a function of controlling the blade inverter frequency Fbb through the blade driver 13B so as to control a blade rotating speed Vbb.

The system controller 50 has a function of controlling the axle inverter frequency Faa, Fab through the axle drivers 23A, 23B so as to control the running speed V.

The system controller 50 has a function of controlling the deck height position H through the deck driver 33.

An explanation will be given of the function of the electric lawn mowing work machine 100. The electric lawn mowing work machine 100 performs the lawn mowing work while being run. Therefore, assuming that the lawn is grown uniformly, as the running speed V becomes high, the work load increases. By contrast, as the running speed V becomes low, the work load decreases.

The electric lawn mowing work machine 100 performs the lawn mowing work by rotating the blades 11A, 11B. Therefore, assuming that the lawn is grown uniformly, as the blade rotating speed Vba, Vbb become high, the work load increases. By contrast, as the blade rotating speed Vba, Vbb become low, the work load decreases.

The electric lawn mowing work machine 100 performs the lawn mowing work by the blades 11A, 11B arranged at the bottom part of the deck 3. Therefore, assuming that the lawn is grown uniformly, as the deck height position H becomes a low position from the surface of the earth, the work load increases. By contrast, as the deck height position H becomes a high position from the surface of the earth, the work load decreases.

### [Embodiment 1]

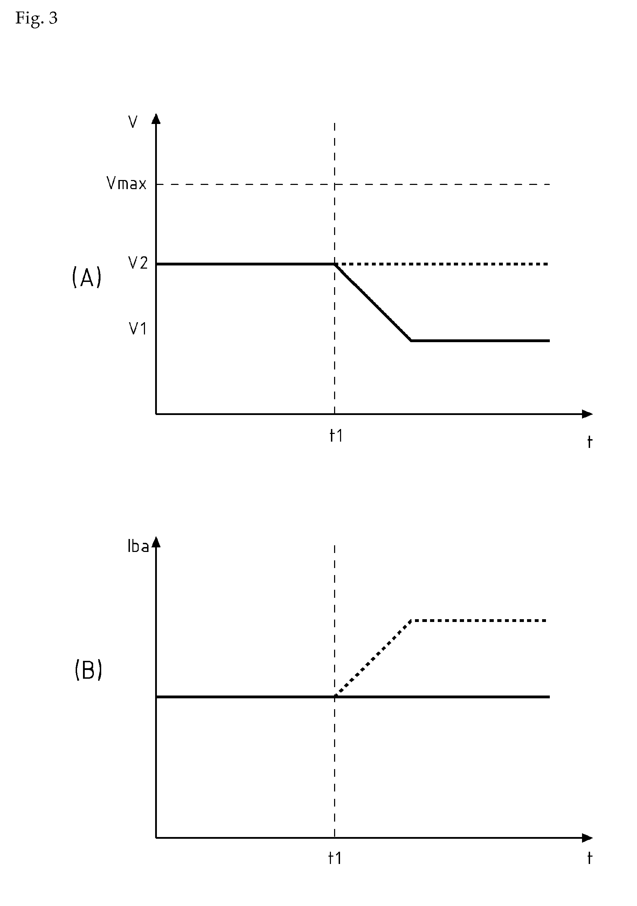

An explanation will be given of a running speed regulation which is a first embodiment with reference to FIG. 3 to FIG. 4. The running speed regulation controls the running parts 20A, 20B so as to avoid the working parts 10A, 10B of the electric lawn mowing work machine 100 from being in an overload operation.

An explanation will be given of a running speed regulation 1 with reference to FIG. 3. The graph illustrated in FIG. 3(A) shows a time series graph of the running speed V. The graph illustrated in FIG. 3(B) shows a time series graph of the blade inverter current value Iba. In FIG. 3(A) and FIG. 3(B), the continuous line indicates the graph value of the case in which the running speed regulation 1 is performed, whereas the dashed line indicates the graph value of the case in which the running speed regulation 1 is not performed.

In the running speed regulation 1, the running speed V is controlled such that the work load on the working part 10A is constant. Here, the blade inverter current value Iba corresponds to the work load on the working part 10A. And the running speed V is proportional to the axle inverter frequency Faa. That is to say, in the running speed regulation 1, the axle inverter frequency Faa is controlled such that the blade inverter current value Iba is constant.

Specifically, assuming that the electric lawn mowing work machine 100 comes at a region in which a lawn is thickly planted or a region in which a lawn is grown exuberantly at time t1 when the lawn mowing work is performed. At time t1, the system controller 50 reduces the running speed V from a running speed V2 to a running speed V1 so as to keep the blade inverter current value Iba constant. That is to say, at time t1, when the work load becomes large and the blade inverter current value Iba increases, the system controller 50 sends a deceleration command signal to the axle drivers 23A, 23B to reduce the running speed V from the running speed V2 to the running speed V1 so as to keep the blade inverter current value Iba constant.

Moreover, in the running speed regulation 1, an upper limit running speed Vmax is set as an upper limit value of the running speed V. And the upper limit running speed Vmax is configured to be set based on the turning positions of the turning levers 7A, 7B (see FIG. 1). That is to say, the upper limit running speed Vmax is a maximum speed when the turning levers 7A, 7B are turned to predetermined positions.

In the running speed regulation 1, as already explained, the running speed V is controlled such that the work load of the working part 10A is constant. The same regulation is performed with regard to the working part 10B.

In the running speed regulation 1, the running speed V is controlled such that the larger of the blade inverter current value, that is, the blade inverter current value Iba of the working part 10A or the blade inverter current value Ibb of the working part 10B, is constant.

An explanation will be given of the effect of the running speed regulation 1. When the work load of the blade motors 12A, 12B rise, the winding temperature of the blade motors 12A, 12B increase. Therefore, the blade motors 12A, 12B themselves have protection devices for avoiding excessive increase in the winding temperature. The blade inverters 14A, 14B have protection devices so as not to supply an overcurrent to the blade motors 12A, 12B. In this manner, as against an overload operation of the blade motors 12A, 12B, the blade motors 12A, 12B themselves or the blade inverters 14A, 14B respectively have the protection devices. Because of this configuration, when an overcurrent is applied to the blade motors 12A, 12B or the blade inverters 14A, 14B, power supply is interrupted by the protection devices. As an entire system of the electric lawn mowing work machine 100, overload operation of the working parts 10A, 10B need to be prevented so as to prevent an operation stop of the electric lawn mowing work machine 100 due to the operation of these protection devices etc.

According to the running speed regulation 1, the work load of the working parts 10A, 10B is controlled to be constant. Consequently, overload operation of the working parts 10A, 10B can be avoided.

Moreover, by setting the upper limit running speed Vmax to the running speed V, the electric lawn mowing work machine 100 can be prevented from running out of control even when excessively small work load is applied to the working parts 10A, 10B.

Furthermore, by setting the upper limit running speed Vmax to a value that corresponds to the turning angle of the turning levers 7A, 7B, operability of the operator can be improved.

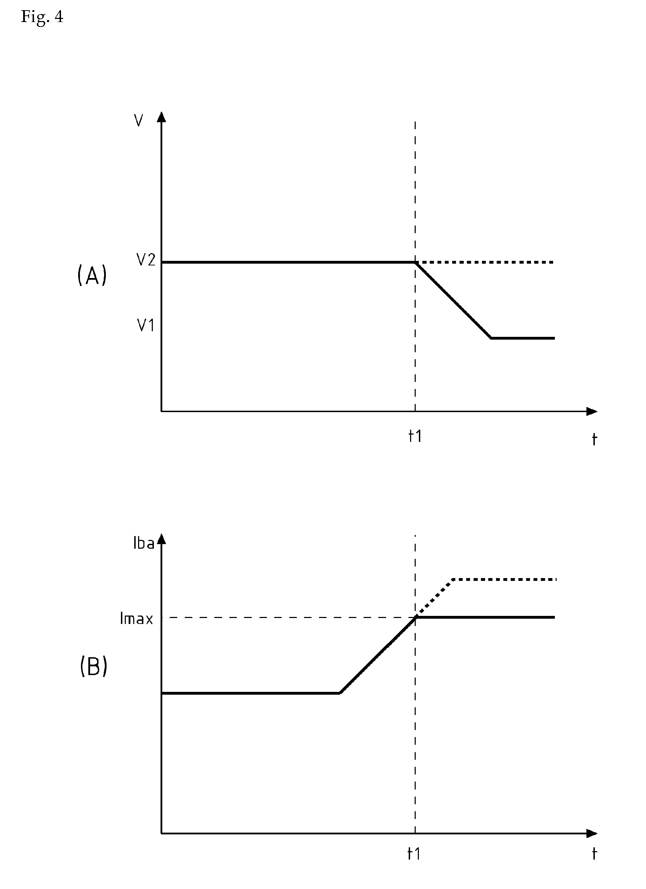

An explanation will be given of a running speed regulation 2 with reference to FIG. 4. The graph illustrated in FIG. 4(A) shows a time series graph of the running speed V. The graph illustrated in FIG. 4(B) shows a time series graph of the blade inverter current value Iba. In FIG. 4(A) and FIG. 4(B), the continuous line indicates the graph value of the case in which the running speed regulation 2 is performed, whereas the dashed line indicates the graph value of the case in which the running speed regulation 2 is not performed.

In the running speed regulation 2, the running speed V is controlled such that the work load on the working part 10A does not exceed a predetermined upper limit load. That is to say, in the running speed regulation 2, the axle inverter frequency Faa is controlled such that the blade inverter current value Iba as a load torque value does not exceed a predetermined upper limit current value Imax.

Specifically, assuming that the electric lawn mowing work machine 100 comes at a region in which a lawn is thickly planted or a region in which a lawn is grown exuberantly at a constant running speed V2 when the lawn mowing work is performed. Here, due to the increase in the work load, the blade inverter current value Iba rises. At time t1, when the system controller 50 determines that the blade inverter current value Iba has reached the upper limit current value Imax, the system controller 50 decreases the running speed V from the running speed V2 to the running speed V1 such that the blade inverter current value Iba does not exceed the upper limit current value Imax.

In the running speed regulation 2, as already explained, the running speed V is controlled such that the work load of the working part 10A does not exceed a predetermined upper limit load. The same regulation is performed with regard to the working part 10B.

In the running speed regulation 2, the running speed V is controlled such that the larger of the blade inverter current value, that is, the blade inverter current value Iba of the working part 10A or the blade inverter current value Ibb of the working part 10B, does not exceed the upper limit current value Imax.

An explanation will be given of the effect of the running speed regulation 2. According to the running speed regulation 2, the work load of the working parts 10A, 10B is controlled so as not to exceed the predetermined upper limit load. Consequently, an overload operation of the working parts 10A, 10B can be avoided.

An explanation will be given of other configurations of Embodiment 1. In Embodiment 1, the system controller 50 is configured to control the running speed V such that the work load of the working parts 10A, 10B is constant (running speed regulation 1), or such that the work load of the working parts 10A, 10B does not exceed the predetermined upper limit load (running speed regulation 2). However, the blade drivers 13A, 13B may be configured to directly communicate with the axle drivers 23A, 23B without through the system controller 50 and configured to control the running speed V such that the work load of the working parts 10A, 10B is constant or such that the work load of the working parts 10A, 10B does not exceed the predetermined upper limit load.

By communicating the blade drivers 13A, 13B directly with the axle drivers 23A, 23B without through the system controller 50, the electric lawn mowing work machine 100 can correspond to a sudden change in a load.

In Embodiment 1, the driving means of the running parts 20A, 20B are configured as axle motors 22A, 22B. However, the configuration of the driving means is not limited to this. For example, the driving means of the running parts 20A, 20B may be configured as an engine. In this case, an engine controller (ECU) may be connected to the system controller 50, and an engine rotating speed may be controlled such that the blade inverter current value Iba is constant.

In Embodiment 1, the power is supplied to the working parts 10A, 10B by the battery 6. However, the power supply source is not limited to this. For example, the power may be supplied to the working parts 10A, 10B by a generator driven by an engine, and the driving means of the running parts 20A, 20B may be configured as the engine. In this case, the engine rotating speed may be controlled such that the blade inverter current value Iba is constant.

### [Embodiment 2]

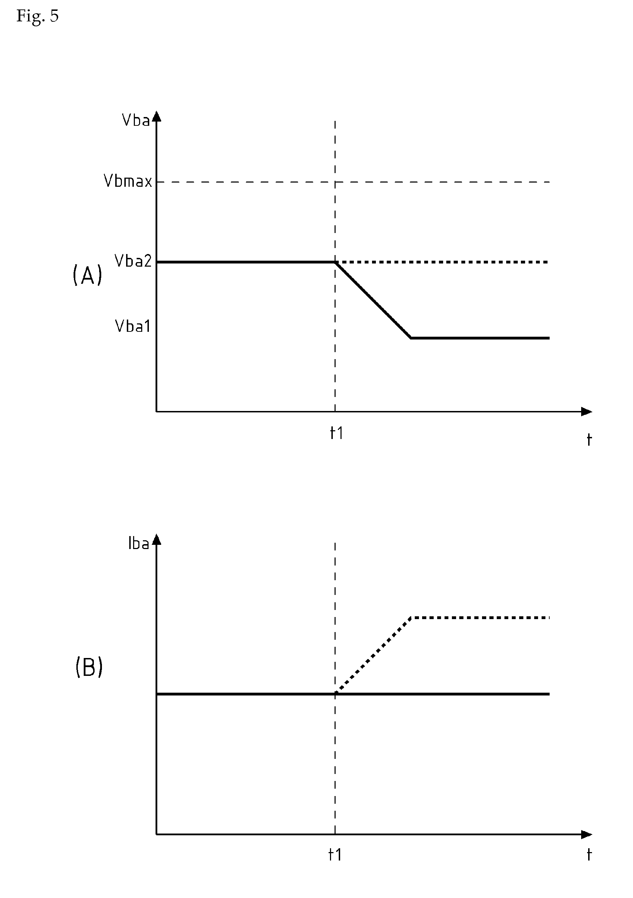

An explanation will be given of a blade rotating speed regulation which is a second embodiment with reference to FIG. 5 to FIG. 6. The blade rotating speed regulation controls the blade rotating speed Vba, Vbb so as to avoid overload operation of the working parts 10A, 10B of the electric lawn mowing work machine 100.

An explanation will be given of a blade rotating speed regulation 1 with reference to FIG. 5. The graph illustrated in FIG. 5(A) shows a time series graph of the blade rotating speed Vba. The graph illustrated in FIG. 5(B) shows a time series graph of the blade inverter current value Iba. In FIG. 5(A) and FIG. 5(B), the continuous line indicates the graph value of the case in which the blade rotating speed regulation 1 is performed, whereas the dashed line indicates the graph value of the case in which the blade rotating speed regulation 1 is not performed.

The blade rotating speed regulation 1 controls the blade rotating speed Vba such that the work load of the working part 10A is constant. Here, the blade inverter current value Iba corresponds to the work load on the working part 10A. And the blade rotating speed Vba is proportional to the blade inverter frequency Fba. That is to say, in the blade rotating speed regulation 1, the blade inverter frequency Fba is controlled such that the blade inverter current value Iba is constant.

Specifically, assuming that the electric lawn mowing work machine 100 comes at a region in which a lawn is thickly planted or a region in which a lawn is grown exuberantly at time t1 when the lawn mowing work is performed. At time t1, the system controller 50 reduces the blade rotating speed Vba from a blade rotating speed Vba2 to a blade rotating speed Vba1 so as to keep the blade inverter current value Iba constant. That is to say, when the system controller 50 determines that the blade inverter current value Iba rises due to the increase in the work load, the system controller 50 sends a deceleration command signal to the blade drivers 13A, 13B to reduce the blade rotating speed Vba from the blade rotating speed Vba2 to the blade rotating speed Vba1 so as to keep the blade inverter current value Iba constant.

Moreover, in the blade rotating speed regulation 1, an upper limit blade rotating speed Vbmax is set as an upper limit value of the blade rotating speed Vba.

In the blade rotating speed regulation 1, as already explained, the blade rotating speed Vba is controlled such that the work load of the working part 10A is constant. The same regulation is performed with regard to the working part 10B.

An explanation will be given of the effect of the blade rotating speed regulation 1. According to the blade rotating speed regulation 1, the work load of the working parts 10A, 10B is kept constant. Therefore, an overload operation of the working parts 10A, 10B can be avoided.

Moreover, by setting the upper limit blade rotating speed Vbmax to the blade rotating speed Vba and the blade rotating speed Vbb, the blade 11A or the blade 11B can be prevented from running out of control even when excessively small work load is applied to the working parts 10A, 10B.

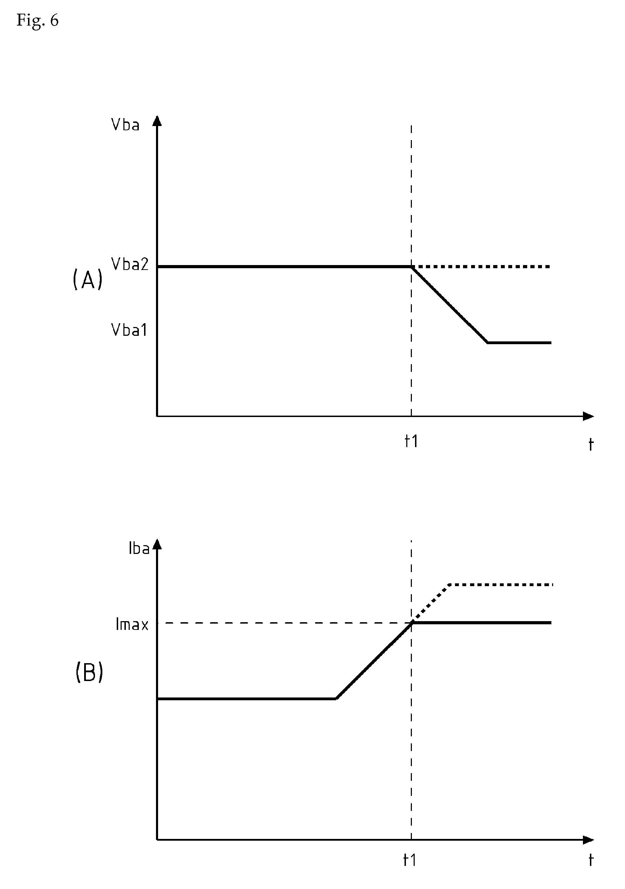

An explanation will be given of a blade rotating speed regulation 2 with reference to FIG. 6. The graph illustrated in FIG. 6(A) shows a time series graph of the blade rotating speed Vba. The graph illustrated in FIG. 6(B) shows a time series graph of the blade inverter current value Iba. In FIG. 6(A) and FIG. 6(B), the continuous line indicates the graph value of the case in which the blade rotating speed regulation 2 is performed, whereas the dashed line indicates the graph value of the case in which the blade rotating speed regulation 2 is not performed.

The blade rotating speed regulation 2 controls the blade rotating speed Vba such that the work load on the working part 10A does not exceed a predetermined upper limit load. That is to say, the blade rotating speed regulation 2 controls the blade inverter frequency Fba such that the blade inverter current value Iba does not exceed the upper limit current value Imax.

Specifically, assuming that the electric lawn mowing work machine 100 comes at a region in which a lawn is thickly planted or a region in which a lawn is grown exuberantly at a constant blade rotating speed Vba when the lawn mowing work is performed. Here, due to the increase in the work load, the blade inverter current value Iba rises. At time t1, when the system controller 50 determines that the blade inverter current value Iba has reached the upper limit current value Imax, the system controller 50 decreases the blade rotating speed Vba from the blade rotating speed Vba2 to the blade rotating speed Vba1 such that the blade inverter current value Iba does not exceed the upper limit current value Imax.

In the blade rotating speed regulation 2, as described above, the blade rotating speed Vba is controlled such that the work load of the working part 10A does not exceed the predetermined upper limit load. The same regulation is performed with regard to the working part 10B.

An explanation will be given of the effect of the blade rotating speed regulation 2. According to the blade rotating speed regulation 2, the work load of the working part 10A, 10B does not exceed the predetermined upper limit load. As such, an overload operation of the working parts 10A, 10B can be avoided.

### [Embodiment 3]

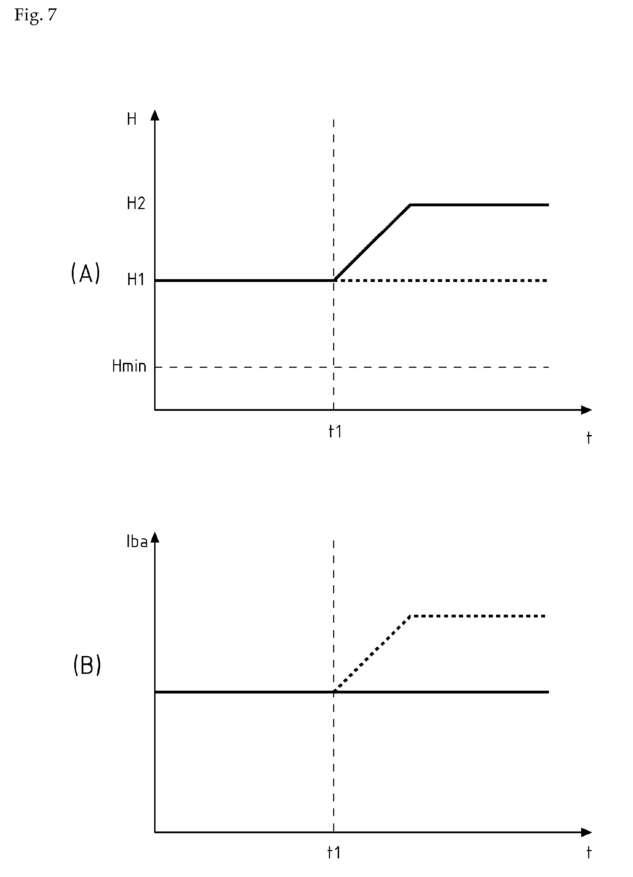

An explanation will be given of a deck height regulation which is the first embodiment with reference to FIG. 7 to FIG. 8. The deck height regulation controls the height position of the deck 3 (working height position) so as to avoid an overload operation of the working parts 10A, 10B of the electric lawn mowing work machine 100.

An explanation will be given of a deck height regulation 1 with reference to FIG. 7. The graph illustrated in FIG. 7(A) shows a time series graph of the deck height position H. The graph illustrated in FIG. 7(B) shows a time series graph of the blade inverter current value Iba. In FIG. 7(A) and FIG. 7(B), the continuous line indicates the graph value of the case in which the deck height regulation 1 is performed, whereas the dashed line indicates the graph value of the case in which the deck height regulation 1 is not performed.

The deck height regulation 1 controls the deck height position H such that the work load of the working part 10A is constant. Here, the blade inverter current value Iba corresponds to the work load on the working part 10A. That is to say, in other words, the deck height regulation 1 controls the adjustment of the deck height position H such that the blade inverter current value Iba is constant.

Specifically, assuming that the electric lawn mowing work machine 100 comes at a region in which a lawn is thickly planted or a region in which a lawn is grown exuberantly at time t1 when the lawn mowing work is performed. At time t1, the system controller 50 adjusts the deck height position H from a deck height position H1 to a deck height position H2 so as to keep the blade inverter current value Iba constant. That is to say, at time t1, when the system controller 50 determines that the blade inverter current value Iba has raised due to the increase in the work load, the system controller 50 sends an ascension command signal to the deck driver 33 to uplift the deck 3 by operating the deck height adjusting mechanism 31 so as to keep the blade inverter current value Iba constant.

Moreover, in the deck height regulation 1, a lower limit deck height position Hmin is set as an lower limit position of the deck height position H.

In the deck height regulation 1, the adjustment of the deck height position H is controlled such that the larger of the inverter current value, that is, the blade inverter current value Iba of the working part 10A or the blade inverter current value Ibb of the working part 10B, is constant.

An explanation will be given of the effect of the deck height regulation 1. According to the deck height regulation 1, the work load of the working parts 10A, 10B is kept constant. As such, an overload operation of the working parts 10A, 10B can be avoided.

Moreover, by setting the lower limit deck height position Hmin to the deck height position H, the deck 3 would not go down rapidly and collide against the ground surface when excessively small work load is applied to the working parts 10A, 10B.

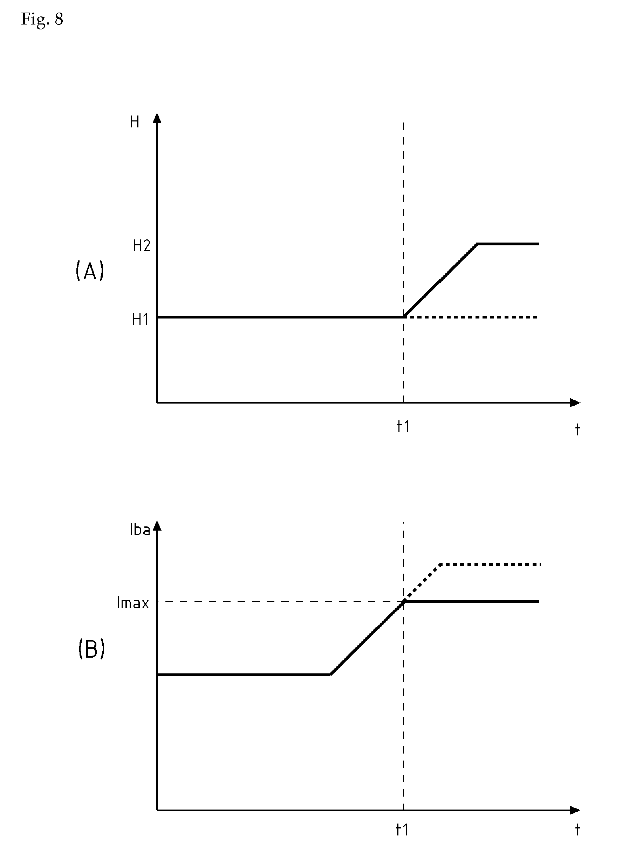

An explanation will be given of a deck height regulation 2 with reference to FIG. 8. The graph illustrated in FIG. 8(A) shows a time series graph of the deck height position H. The graph illustrated in FIG. 8(B) shows a time series graph of the blade inverter current value Iba. In FIG. 8(A) and FIG. 8(B), the continuous line indicates the graph value of the case in which the deck height regulation 2 is performed, whereas the dashed line indicates the graph value of the case in which the deck height regulation 2 is not performed.

The deck height regulation 2 controls the adjustment of the deck height position H such that the work load on the working part 10A does not exceed a predetermined upper limit load. That is to say, the deck height regulation 2 controls the adjustment of the deck height position H such that the blade inverter current value Iba does not exceed the predetermined upper limit current value Imax.

Specifically, assuming that the electric lawn mowing work machine 100 comes at a region in which a lawn is thickly planted or a region in which a lawn is grown exuberantly when the lawn mowing work is performed at a constant deck height position H. Here, due to the increase in the work load, the blade inverter current value Iba rises. At time t1, when the system controller 50 determines that the blade inverter current value Iba has reached the upper limit current value Imax, the system controller 50 sends an ascension command signal to the deck driver 33 to adjust the deck height position H from the deck height position H1 to the deck height position H2 by operating the deck height adjusting mechanism 31 such that the blade inverter current value Iba does not exceed the upper limit current value Imax.

In the deck height regulation 2, as described above, the adjustment of the deck height position H is controlled such that the work load of the working part 10A does not exceed the predetermined upper limit load. The same regulation is performed with regard to the working part 10B.

In the deck height regulation 2, the adjustment of the deck height position H is controlled such that the larger of the blade inverter current value, that is, the blade inverter current value Iba of the working part 10A or the blade inverter current value Ibb of the working part 10B, does not exceed the upper limit current value Imax.

An explanation will be given of the effect of the running speed regulation 2. According to the deck height regulation 2, the work load of the working parts 10A, 10B does not exceed the predetermined upper limit load. As such, an overload operation of the working parts 10A, 10B can be avoided.

An explanation will be given of other configurations of Embodiment 3. In Embodiment 3, as described above, the system controller 50 is programmed to adjust the deck height position H such that the work load of the working parts 10A, 10B is constant (deck height regulation 1), or such that the work load of the working parts 10A, 10B does not exceed the predetermined upper limit load (deck height regulation 2). However, the blade drivers 13A, 13B may be configured to directly communicate with the deck driver 33 without through the system controller 50. In such case, the blade drivers 13A, 13B may be programmed to adjust the deck height position H such that the work load of the working parts 10A, 10B is constant, or such that the work load of the working parts 10A, 10B does not exceed the predetermined upper limit load.

By communicating the blade drivers 13, 13B directly with the deck driver 33 without through the system controller 50, the electric lawn mowing work machine 100 can correspond to a sudden change in a load.

### [Embodiments 1 to 3]

Also, the electric lawn mowing work machine 100 can perform lawn mowing work by combining a plurality of respective Embodiments 1 to 3. In such case, priority order of Embodiments 1 to 3 is order of Embodiment 1, Embodiment 2, and Embodiment 3. For example, in the case of combining the running speed regulation 1 of Embodiment 1 and the blade rotating speed regulation 1 of Embodiment 2, the regulation is performed in order of the running speed regulation 1, and the blade rotating speed regulation 1.

### INDUSTRIAL APPLICABILITY

The present invention is applicable to a mobile electric work machine.

## Claims

1. A mobile electric work machine that carries out work by a working part driven by electric power supplied by a power converter while being run by a running part, wherein the working speed of the working part is controlled such that the work load on the working part is constant on the basis of the load torque value from the power converter.

2. The mobile electric work machine according to Claim 1 wherein, an upper limit of the working speed is set.

3. A mobile electric work machine that carries out work by a working part driven by electric power supplied by a power converter while being run by a running part, wherein the working speed of the working part is controlled such that the work load on the working part does not exceed a predetermined load on the basis of the load torque value from the power converter.

4. The mobile electric work machine according to any one of Claims 1 to 3 wherein,
when the plurality of working parts and power converters exist, the maximum load torque value is defined as the load torque value.
